# EUROPEAN PATENT APPLICATION

(11) **EP 3 595 031 A1**
(43) Date of publication of application: **15.01.2020**
(21) Application number: 18182437.6
(22) Date of filing: 09.07.2018
(51) Int. Cl.: H01M 2/10, H01M 10/625, H01M 10/6556, H01M 10/6555, H01M 10/6557

(54) **TEMPERATURE REGULATION ELEMENT, BATTERY MODULE, BATTERY PACK AND USE**

(71) Applicant: Valmet Automotive Oy, 23501 Uusikaupunki (FI)
(72) Inventor: Hoivala, Matti, 23501 Uusikaupunki (FI); Korpa, Lasse, 23200 Vinkkilä (FI)
(74) Representative: Papula Oy

(57) **Abstract**

A temperature regulation element for a battery cell is disclosed. The element comprises a metal body (1) having a first end (11) and a second end (12), and at least one heat-exchange surface (13) between the first end and the second end for making thermal contact with a battery cell (6). The body further comprises at least one first fluid channel (2) and at least one second fluid channel (3) together forming a continuous flow channel for thermal transfer fluid. The at least one first fluid channel is positioned further away from the heat-exchange surface than the at least one second fluid channel, and the first fluid channel(s) and the second fluid channel(s) are configured to allow thermal exchange between the thermal transfer fluid flowing in the first fluid channel(s) and the thermal transfer fluid flowing in the second fluid channel(s). A battery module and a battery pack are also disclosed.

## Description

### TECHNICAL FIELD

The present invention relates to a temperature regulation element, to a battery module, to a battery pack and to use of a temperature regulation element.

### BACKGROUND OF THE INVENTION

The operational life of rechargeable battery cells depends to a large extent on the temperature of the battery cells during their life, and especially during use. To obtain the longest possible operational life the operating temperature of the battery cells should be maintained on a certain level, or within a certain temperature range. Due to electrical resistance, recharging or discharging battery cells creates thermal energy, which has to be conducted away from the cells as effectively as possible to maintain the battery cell temperature as close to optimum as feasible. The thermal energy produced during recharging or discharging depends on the speed of recharging and discharging: the faster the process, the more thermal energy is produced.

Further, in some situations it must be possible to warm up the battery cells in order to get them to a desired operating temperature at the beginning of use.

The battery cells should also be protected against damages and deformation. When damaged, the battery cells may short-circuit, which may lead to an uncontrolled electric discharge resulting in a fire or an explosion. If possible, the deformation of battery cells should be prevented by a safe structure which takes various accident situations into account.

Temperature regulation of battery modules is performed by placing the battery cells into thermal contact with temperature regulation elements having channels in which thermal transfer fluid flows. Providing even temperature to all battery cells within a battery module or a battery pack has turned out to be challenging. In the current systems, solutions have been sought by providing multiple structures in which the thermal transfer fluid flows. The drawbacks of the current solutions include increased number of components needed for a temperature regulation system, increased number of connections between the components, and the associated increase in cost, as well as risk of fluid leakage. Alternative solutions include the use of thermoelectric effect and phase transition in thermal regulation of the battery cells.

### SUMMARY OF THE INVENTION

The current disclosure relates to a temperature regulation element for a battery cell comprising a metal body having a first end and a second end. The body further comprises at least one heat-exchange surface between the first end and the second end for making thermal contact with a battery cell. The body further comprises at least one first fluid channel and at least one second fluid channel, each extending inside the body between the first end and the second end of the body and together forming a continuous flow channel for thermal transfer fluid. The temperature regulation element is characterized in that the at least one first fluid channel is positioned further away from the heat-exchange surface than the at least one second fluid channel, and in that the first fluid channel and the second fluid channel are configured to allow thermal exchange between the thermal transfer fluid flowing in the at least one first fluid channel and the thermal transfer fluid flowing in the at least one second fluid channel.

The current disclosure also relates to a battery module, and to a battery pack which are characterized in that they comprise a temperature regulation element according to the current disclosure. The current disclosure further relates to use of a temperature regulation element.

An advantage of the temperature regulation element, the battery module and the battery pack according to the present disclosure is that temperature regulation, i.e. thermal management, of the battery cells may be improved over prior-art solutions. Especially, the temperature difference between the battery cells and the thermal transfer fluid may be kept more uniform throughout the battery pack, which reflects in more uniform temperature of the battery cells.

The performance of the battery pack is determined by the weakest battery cell. Therefore, uniform ageing and decrease in performance are important for utilizing the battery pack as efficiently as possible. If some cells in the battery pack, for example battery cells in certain positions, age faster than others, all battery cells are replaced when the performance of the first ones deteriorates below a predetermined threshold. The temperature regulation element according to the present disclosure might therefore have the advantage of improving the material usage of the battery cells, since a larger proportion of the battery cells might serve a larger portion of their inherent usage life and not be prematurely replaced.

As temperature fluctuations, and especially heating, accelerate the ageing of the battery cells, maintaining all the battery cells as close to the optimum temperature as possible is a key parameter for increasing the life of a battery pack. A more uniform temperature difference between the battery cells and the thermal transfer fluid throughout the battery module may allow better optimization of the functional parameters of the thermal transfer fluid, such as temperature and flow speed, to maintain the battery cells close to the optimal temperature. Thus, the temperature regulation element according to the current disclosure may extend operational life of the battery cells. Also the number of usable recharge/discharge cycles may increase.

Yet another advantage is that it might be possible to recharge and discharge the battery cells faster, while remaining sufficiently close to the optimal temperature.

The advantages of the current temperature regulation element may be especially apparent the larger the temperature regulation element is, as the distance along which the thermal transfer fluid is engages in thermal exchange with other parts of the element increases.

### BRIEF DESCRIPTION OF THE DRAWINGS

The accompanying drawings, which are included to provide a further understanding of the disclosure and constitute a part of this specification, illustrate embodiments and together with the description help to explain the principles of the disclosure. In the drawings:
Figure 1 is an exemplary embodiment of the temperature regulation element according to the current disclosure.
Figure 2 is a schematic presentation of a battery pack according to the current disclosure as a side view.
Figure 3, panels A and B, depicts cross sections of embodiments of the current temperature regulation element in a schematic manner.
Figure 4, panels A to F, depicts cross sections of embodiments of the current temperature regulation element in a schematic manner.
Figure 5, panels A and B, depicts longitudinal sections of an embodiment of the current temperature regulation element in a schematic manner.

### DETAILED DESCRIPTION

The temperature regulation element, the battery module and the battery pack according to the present disclosure may be used in any applications utilizing battery cells. Their advantages may be apparent in fully or partly electricity-powered vehicles, such as land vehicles, ships and airplanes. Additionally, they can be used in stationary electricity sources, such as reserve power sources, solar power applications and industrial machinery.

In one aspect, a temperature regulation element for a battery cell is disclosed. The temperature regulation element comprises a metal body having a first end and a second end, and at least one heat-exchange surface between the first end and the second end for making thermal contact with a battery cell, the body further comprising at least one first fluid channel and at least one second fluid channel, each extending inside the body between the first end and the second end of the body and together forming a continuous flow channel for thermal transfer fluid. The temperature regulation element is characterized in that the at least one first fluid channel is positioned further away from the heat-exchange surface than the at least one second fluid channel, and in that the first fluid channel and the second fluid channel are configured to allow thermal transfer between the thermal transfer fluid flowing in the at least one first fluid channel and the thermal transfer fluid flowing in the at least one second fluid channel. The distance between the first fluid channel and the second fluid channel is typically in the range of millimeters, for example 1 mm to 8 mm, such as 2 mm, 4 mm or 5 mm.

The temperature regulation element functions as a heat sink. It dissipates heat generated during the functioning of battery cells. However, the temperature regulation element can also be used for heating up the battery cells. The present temperature regulation element may be especially useful in vehicles, or industrial power storage applications. The battery cells, and contacts between them, may be organized in various ways, as is known to the skilled person.

The battery cells are in thermal contact with the temperature regulation element through the heat-exchange surface of the body. The thermal contact may be a direct contact, or it may take place through a thermal transfer medium, such as heat-conducting paste. It is possible that also other areas of the body take part in thermal exchange with the battery cells, but due to the size and the shape of the heat-exchange surface, the largest part of the thermal exchange takes place through it.

In the current disclosure, the heat-exchange surface is between the first end and the second end of the body. The heat-exchange surface may extend all the way between the first end and the second end of the body, but it is also possible that there are surfaces between the first end and the second end that have other functions, such as attachment or mechanical support.

There may be one or more heat-exchange surfaces in a temperature regulation element. For example, if the body is positioned between two battery cells, there may be two heat-exchange surfaces in the body. In such a case, they are typically on the opposite sides of the body. Further, the body may be shaped as a flat piece, so that the two largest surfaces, which in many embodiments are rectangular, form the largest surfaces of the body. The heat-exchange surfaces may be shaped to conform to the shape of the battery cells. Depending on the shape and positioning of the battery cells, the heat-exchange surface or surfaces may thus be even, or contain shapes, such as heat-transfer fins, to match the shape of the battery cells.

A battery cell may be in thermal contact with one or more temperature regulation elements. For example, two ends, such as the terminal end and the end opposite to the terminal end, may each be in contact with a temperature regulation element. A temperature regulation element is typically in thermal contact with several battery cells. For example, the battery cells may be arranged side by side, and a temperature regulation element may extend over several of the battery cells. A temperature regulation element may extend over several battery modules. For example, a temperature regulation element may be in thermal contact with battery cells of two, four or six battery modules.

The thermal contact between the battery cells and the temperature regulation element achieves thermal exchange between the battery cells and the temperature regulation element. Thus, the temperature of the battery cells can be regulated through the temperature of the temperature regulation element.

The temperature regulation element according to the present disclosure comprises a metal body. Metal, such as copper, steel or aluminium, is suitable for use in temperature regulation elements, as is has good heat-conductance.

In one embodiment of the temperature regulation element, the metal body is made of extruded aluminium or aluminium alloy. Amongst metals, aluminium may be preferred especially in mobile applications, such as vehicles, since it is light, to limit the weight of the power source. This again, may be beneficial for the power consumption of the vehicle, which is reflected in its environmental friendliness, using cost and the operational range of the vehicle. Further, aluminium extrusion may be performed accurately. In an embodiment, the body comprises anodized aluminum. Anodizing might contribute to the electrical insulation between the battery cells and the temperature regulation element. Further, it may be possible to produce the temperature regulation by alternative means, such as three-dimensional printing. The body may be manufactured as one seamless piece.

The body of the temperature regulation element is typically shaped as a parallelepiped, most typically as a rectangular cuboid. In addition to its general shape, the body may comprise shapes that are used to fit the temperature regulation element in its place in the battery module or battery pack. The body may also contain protrusions that improve the thermal exchange capacity of the temperature regulation element, such as heat dissipation ribs or thermal transfer fins extending between battery cells.

The corners and edges of the body may be rounded to facilitate installation and/or to avoid sharp points that may damage other components or cause injuries.

The temperature of the temperature regulation element is adjusted through thermal transfer fluid, which flows in one or more fluid channels. In the current disclosure, the body comprises at least one first fluid channel, and at least one second fluid channel. Both fluid channels extend inside the body. Thermal transfer fluid flows in the fluid channels and is in thermal contact with the body.

In the current disclosure, the second fluid channel is closer to the heat-exchange surface than the first fluid channel is. If there are two heat-exchange surfaces on the opposite sides of the body, there may be two second fluid channels or groups of fluid channels, each second fluid channel or a group of fluid channels engaging in thermal exchange primarily with one heat-exchange surface. One or more first fluid channels would extend between the second fluid channels or groups of second fluid channels.

In the current disclosure, the first fluid channel(s) and the second fluid channel(s) are configured to allow thermal exchange between the thermal transfer fluid flowing in the first fluid channel(s) and second fluid channel(s). The thermal transfer fluid flowing in at least one first fluid channel may engage in thermal exchange primarily with the inner portions of the body, and with the thermal transfer fluid in the at least one second fluid channel through the body. The thermal transfer fluid flowing in the second fluid channel may be in thermal exchange with the battery cell(s) through the heat-exchange surface, and with the thermal transfer fluid flowing in the first fluid channel through the body. The extent of the thermal-exchange relationships depends, for example, on the size and shape of the various components, and varies in different applications.

As the second fluid channel is closer to the battery cells, the temperature of the thermal transfer fluid in the second fluid channel tends to be closer to the temperature of the battery cells than the temperature of the thermal transfer fluid in the first fluid channel is. In addition, as the thermal transfer fluid flows in each fluid channel, its temperature approaches that of the battery cells through the continued thermal exchange with the body. This thermal exchange may be more effective in the second fluid channel than in the first fluid channel due to the proximity of the heat-exchange surface to the second fluid channel.

The first fluid channel and the second fluid channel extend inside the body. In other words, the fluid channels are closed channels. They may be manufactured, for example by machining into a metal piece forming the body. If the body is manufactured by extrusion, the fluid channels may be formed in the extrusion process.

The fluid channels may have a circular cross section. Also other cross sections, such as an oval or a flat shape, may be possible. In some embodiments, it may be advantageous for the fluid channels to have an angular, such as a rectangular or a square cross section. The possible corners of the fluid channels may be rounded.

The size, i.e. the cross sectional area, of the inner and second fluid channels depends on the volume and speed of the thermal transfer fluid that is intended to flow in the fluid channels, and on how the volume is divided among the fluid channels. For example, if there is one first fluid channel and several second fluid channels, the size of each second fluid channel is correspondingly smaller than that of the single first fluid channel. The skilled person is able to determine the appropriate sizes depending on the application in question.

All the first fluid channels may have the same size. However, depending on the design details of the temperature regulation element, there may be first fluid channels of various sizes in body of a temperature regulation element. Similarly, all the second fluid channels may have the same size, but there may be second fluid channels of various sizes in a body of a temperature regulation element.

The inner and second fluid channels may have variable cross-sectional profiles. In one embodiment, all the fluid channels are flat, so that the surface facing the direction of the closest heat-exchange surface is as large as possible. Such shape might be advantageous in view of the efficiency of the temperature regulation of the heat-exchange surface. A flat fluid channel may have a cross sectional profile of a rectangle or the short sides may be round.

The inner and second fluid channels typically have constant cross-sectional profiles, and constant cross-sectional area along their whole length. In some applications, however, the cross-sectional profile and/or the cross-sectional area may vary along the length of the fluid channel. Further, it is possible that a circular cross section of a first fluid channel expands into a flat channel, wherein the height of the expanded channel corresponds to the diameter of the circular channel, or *vice versa.*

The first fluid channel and the second fluid channel extend between the first end and the second end of the body. The first end is the end from which the thermal transfer fluid is fed into the temperature regulation element. The second end is the opposite end. Typically, the longest sides of the temperature regulation element are between the first end and the second end.

In one embodiment of the temperature regulation element, the inner and second fluid channels run parallel to each other. This way, the distance between the first fluid channel and the second fluid channel is constant, which may lead to uniformity in the thermal exchange capacity along the length of the fluid channels. Typically, the inner and second fluid channels would run parallel at least for the majority of their length. In many applications, they may run parallel substantially their whole lengths.

The distance between the first fluid channel(s) and the second fluid channel(s) may be chosen according to the application in question. The closer the fluid channels are to each other, the more effective the thermal exchange between the fluid channels. However, in some applications, the stability of the structure, for example, may necessitate a certain minimum distance. The skilled person is able to select an appropriate distance between the fluid channels.

It is possible that the fluid channels do not extend over the whole length of the body between the first end and the second end. However, in one embodiment of the temperature regulation element, the inner and second fluid channels extend substantially over the whole length between the first end and the second end of the body. Typically, the fluid channels extend from one end of the body to another, i.e. they extend over the whole length of the body. However, in some embodiments, there may be space at one or both ends of the body, to which the fluid channels do not extend. Such scenario may be at hand, for example, if there are depressions made into the ends of the body for a flow-guiding arrangement or connection element. This design may be chosen, for example, if the space available for the temperature regulation element is limited and/or if the length of the body is maximized to attain advantages in leakage proofing of the battery module.

In an embodiment, the inner and second fluid channels are straight. A straight fluid channel is simple to manufacture, as machining in one direction or a simple extrusion process may be utilized. Typically, the fluid channels extend in the same direction with the overall shape of the body. In other words, the fluid channels are not oblique. Oblique fluid channels may, however, be a usable alternative in some embodiments.

The appropriate layout of the fluid channels depends on how the battery module in question is assembled, and can be chosen by the skilled person according to the application in question.

The first fluid channel and the second fluid channel form a continuous flow channel for the thermal transfer fluid. A first fluid channel is connected to an second fluid channel so that they form a continuous fluid channel. The connection is an end-to-end connection, i.e. that the flow continues from an end of one fluid channel to the beginning of the other. The connection may take place inside the body or outside it. For example, there may be a hollow space at the second end of the body to which the one or more first fluid channels end. The one or more second fluid channel may have its one end in the same hollow space. Thus, the thermal transfer fluid would enter the hollow space from the first fluid channel(s) and continue to flow to the second fluid channel (s) . This way, the flow of the thermal transfer fluid is continuous from one fluid channel to the next.

In one embodiment of the temperature regulation element, the first fluid channel comprises an inlet end for the thermal transfer fluid to enter into the body, and the second fluid channel comprises an outlet end for the thermal transfer fluid to exit the body. The inlet end and the outlet end may contain structures that allow attaching a guiding arrangement to direct the thermal transfer fluid in to an out of the inner and second fluid channels, respectively. Typically, the inlet end and the outlet end would be located at the first end of the body. In addition to the inlet end, the first fluid channel may have a connection end, which is the other end of the first fluid channel. Similarly, the second fluid channel may have a receiving end, which is the other end of the second fluid channel.

In one embodiment, the temperature regulation element further comprises a guiding arrangement at the first end of the body for directing incoming thermal transfer fluid into the at least one first fluid channel through an inlet, and for directing outgoing thermal transfer fluid from the at least one second fluid channel through an outlet. The guiding arrangement may contain the necessary structures to direct the flow of the thermal transfer fluid in both directions. It may be a single piece, or made of two or more separate or separable pieces. The guiding arrangement may be manufactured separately and attached to the body either separably or integrally. It may be manufactured of the same material as the body, or of different material. In addition to the same metals that may be envisaged for the body, the guiding arrangement may be made of different plastic materials or plastic composites.

In one embodiment of the temperature regulation element, the flow direction of the thermal transfer fluid in the second fluid channel is the opposite to the flow direction of the thermal transfer fluid in the first fluid channel in respect to the first end and the second end of the body. In such an embodiment, the flow direction of the thermal transfer fluid is reversed when the thermal transfer fluid flows from the first fluid channel(s) into the second fluid channel(s). Thus, due to the thermal transfer fluid engaging in thermal exchange with the body, the inlet end of the first fluid channel(s) and the outlet end of the second fluid channel(s) are closest to each other. Correspondingly, the connection end of the first fluid channel is closest to the receiving end of the second fluid channel.

For example, in the case of cooling of the battery cells, the coolest thermal transfer fluid entering the first fluid channel is in thermal exchange with the thermal transfer fluid that has been absorbing most heat during its passage through the inner and second fluid channels (i.e. the fluid at the outlet end of the second fluid channel) . At the same time, the thermal transfer fluid at the connection end of the first fluid channel is in thermal exchange with the thermal transfer fluid in the receiving end of the second fluid channel (i.e. the fluid which was recently passed into the second fluid channel). Therefore, the temperature difference between the thermal transfer fluid flowing in the inner and second fluid channels is the largest near the first end of the body. Without limiting the current invention to any specific theory, the thermal transfer fluid near the outlet end of the second fluid channel may be most efficiently cooled. This system could thus reduce the temperature difference of the thermal transfer fluid that is in thermal exchange with the battery cells at the first end of the body and at the second end of the body. This again, may lead to more even temperature distribution among battery cells spread along the length of the temperature regulation element according to the present disclosure.

The situation is similar in the case the battery cells are heated, but the temperature relationships of the components are reversed.

In one embodiment of the temperature regulation element, the continuous flow channel for thermal transfer fluid is formed by connecting the at least one first fluid channel and the at least one second fluid channel by a connection element outside the body.

The fluid channels may extend all the way to the second end of the body, and connection element, such as a hollow cap, may be secured at the second end to be used as the flow turning space for the thermal transfer fluid. It is further possible that if there is more than one first fluid channel, the thermal transfer fluid is directed to different second fluid channels from each first fluid channel. The connection element may be manufactured separately and attached to the body either separably or integrally. It may be manufactured of the same material as the body, or of different material. In addition to the same metals that may be envisaged for the body, the connection element may be made of different plastic materials or plastic composites.

Various alternatives are available to the skilled person in designing an appropriate connection element to transfer the fluid from the first fluid channel(s) to the second fluid channel(s).

There may be more than one first fluid channel in the body, depending, for example, on the size and thermal exchange capacity requirements of the temperature regulation element, as well as the orientation of the battery cells. Further, even for a given volume of the first fluid channel, it may depend on the desired strength and the method of manufacture how the volume is divided; i.e. if only one first fluid channel or more is used. If there is more than one first fluid channel, they may have a shared inlet so that the fluid of thermal transfer fluid is regulated concurrently.

Similarly to the first fluid channel, there may be more than one second fluid channel in the body for the same reasons as there may be more than one first fluid channel. If there is more than one second fluid channel, they may have a shared entry point so that the flow of thermal transfer fluid is regulated concurrently. Further, in embodiments comprising more than one heat-exchange surface, there may be separate second fluid channel or channels for each heat-exchange surface. Thus, typically each heat-exchange surface has one or more second fluid channels directed at regulating the temperature of that heat-exchange surface. Such a configuration of second fluid channels may be termed a group of second fluid channels. Even if there is more than one group of second fluid channels, the thermal transfer fluid may be fed in to all of them by the same, or by all of the first fluid channels.

In one embodiment, the body comprises one second fluid channel. In one embodiment, the body comprises two or more second fluid channels. There may be, for example, two, four, six or eight second fluid channels in the body.

In one embodiment of the temperature regulation element, the body comprises two or more first fluid channels extending parallel to each other at the same distance from the heat-exchange surface. Such an embodiment is typically a flat piece, in which there are more than one first fluid channel that are broad in the direction of the heat-exchange surface, and their narrow sides face the adjacent first fluid channel. If the body comprises two heat-exchange surfaces on opposite sides of the body, either of the heat-exchange surfaces can be used to define the above-described arrangement of the first fluid channels. However, such temperature regulation elements are typically symmetrical, so that the condition is fulfilled in respect of both heat-exchange surfaces simultaneously.

If there are two first fluid channels, they may also be positioned next to each other so that one first fluid channel is closer to one heat-exchange surface, and the other first fluid channel is closer to the other heat-exchange surface.

In one embodiment of the temperature regulation element, the body comprises two or more second fluid channels extending parallel to each other between the at least one first fluid channel and the heat-exchange surface. In such an embodiments, the second fluid channels are side by side at the same distance from the heat-exchange surface. There may be, for example, three or four second fluid channels on each side of the one or more first fluid channel.

In one embodiment of the temperature regulation element, the body comprises two heat-exchange surfaces on opposite sides of the body, and at least two second fluid channels, and wherein the second fluid channels extend between the at least one first fluid channel and each heat-exchange surface. If the temperature regulation element comprises two heat-exchange surfaces, each heat-exchange surface may be in thermal exchange with a group of second fluid channels running parallel to each other. They may all be at the same distance from both the heat-exchange surface and from the first fluid channel(s). For example, there may be one first fluid channel, and two second fluid channels on its each side facing towards the heat-exchange surfaces. In such an embodiment, there would be two groups of second fluid channels, each of the groups having two channels.

The second fluid channel(s) may be positioned at various distances from the heat-exchange surface. The closer the fluid channels are, the more rapid the thermal exchange between the second fluid channels and the heat-exchange surface may be at the position of the first fluid channel. However, the thermal exchange efficiency may decrease along the heat-exchange surface as the distance from the second fluid channel increases. Therefore, the uniformity of the thermal exchange along the heat-exchange surface, and thus the battery cell temperature, might set a preferable minimum distance from the heat-exchange surface. The shape of the second fluid channels may influence the uniformity of the temperature. The broader the second fluid channels are in the direction of the heat-exchange surface, the broader area of the heat-exchange surface may benefit from rapid heat exchange with the thermal transfer fluid.

A battery module is a unit of battery cells connected to each other in a specific electrical arrangement. A battery module may further comprise control and safety devices, as well as a frame to protect the battery cells, and to attach the battery module in place. In another aspect, a battery module is disclosed. It is characterized in that it comprises a temperature regulation element according to the present disclosure. The temperature regulation element may be implemented as a part of the frame, or as a separate entity attachable to or inside the frame.

The battery module according to the present disclosure thus comprises a temperature regulation element according to the current disclosure, and a plurality of battery cells. The battery module may comprise one temperature regulation element or several temperature regulation elements. In case there is more than one temperature regulation element, only one may be according to the current disclosure. Alternatively, more than one, or even all temperature regulation elements may be according to the present disclosure.

In an embodiment, the temperature regulation element according to the present disclosure is configured to be used in an electricity-powered vehicle. In another embodiment, the temperature regulation element according to the present disclosure is configured to be used in a stationary power storage.

In yet another aspect, a battery pack is disclosed. It is characterized in that it comprises a temperature regulation element according to the current disclosure. A battery pack is the complete set of battery cells of a device, such as an industrial apparatus, or a vehicle. A battery pack may comprise one battery module, or several battery modules. A battery pack may comprise one battery module, or several battery modules. A battery pack further comprises the other necessary elements to operate the battery cells of the device. The battery pack may contain a casing or a housing. Thus, the temperature regulation element according to the current disclosure may be implemented as a part of the battery pack, for example as a part of the casing or the housing, or as a separate entity inside the casing or housing.

In one embodiment, the battery pack comprises a casing configured to surround battery cells, and the first end and the second end of the body are inserted into the casing. Such a structure may improve the resistance of the casing, and the battery pack, against twisting, torsion and/or heavy impacts.

In one embodiment of the battery pack, the first end and the second end of the body extend outside the casing. A temperature regulation element according to the current disclosure may be configured so that the first end and the second end of the body extend outside a casing of a battery pack when installed in place. The casing may be manufactured having appropriately-sized holes or slots for inserting the temperature regulation element into the casing. For example, the casing may be shaped as straight-angled box, and the ends of the body may be insertable to the opposite sides of the casing. This may be done while manufacturing the casing or afterwards.

A configuration where the first end and the second end of the body extend outside the casing may have the advantage that the portion of the temperature regulation element being in the same space with the battery cells does not have any seams or connections. This may reduce the potential sources of thermal transfer fluid leakage, which may improve the safety of the battery pack. The casing or housing of the battery pack may be manufactured as a watertight structure, effectively keeping any leakages outside the casing away from the electrical connections of the battery pack.

In one embodiment of the battery pack, the body is attached to the casing by welding. Welding may produce a liquid-tight seal between the temperature regulation element and the casing, ascertaining that any potential thermal transfer fluid leakages will not enter the battery pack. Further, welding may produce a strong connection, further strengthening the structure against impacts.

In yet another aspect, the use of the temperature regulation element according to the current invention for regulating the temperature of battery cells in an electricity-powered vehicle is disclosed. By an electricity-powered vehicle is herein meant a vehicle that is at least partially powered by electricity. It may contain other means of energy production, such as a combustion engine. It is possible to use the temperature regulation element according to the current disclosure also in reserve power sources, solar power applications and industrial machinery.

### FIGURES

The following figures are used to illustrate the temperature regulation element according to the present disclosure. The figures are not drawn to proportion, unless otherwise indicated. Many of the structures not directly related to the current temperature regulation element are omitted for clarity.

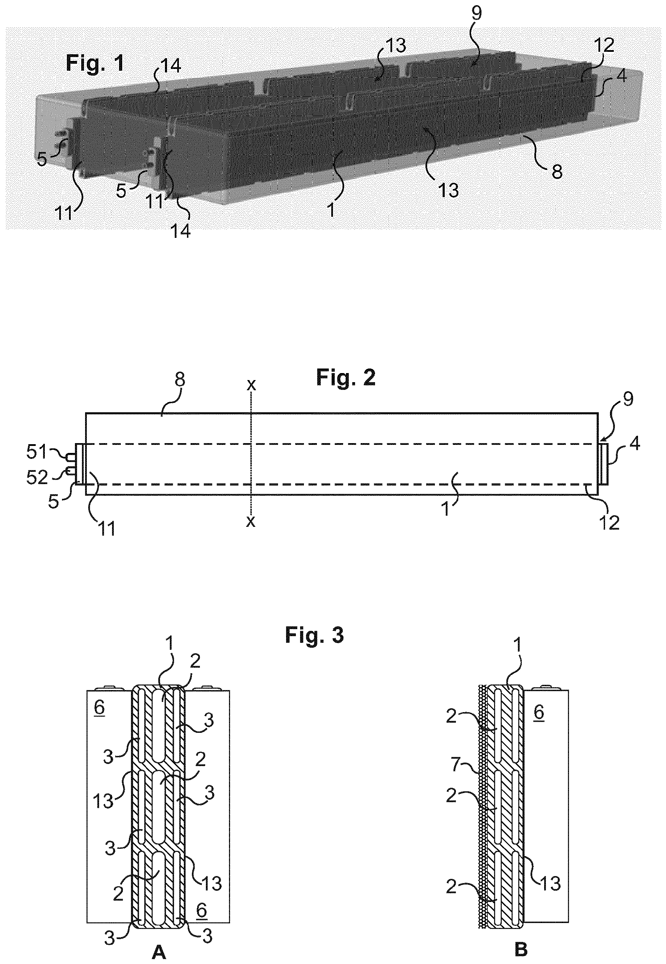

Figure 1 depicts an embodiment of the temperature regulation element 9 according to the present disclosure. A casing 8 of the battery pack is depicted in the figure, but the battery cells are omitted for clarity. In fig. 1, it can be seen that the temperature regulation element 9 may have a longitudinal flat shape, i.e. it is longer than it is high, and the structure is thin compared to both other dimensions. Such a structure may be advantageous in producing effective cooling over a large area. The exemplary embodiment of fig. 1 is approximately 2 m in length, and 20 cm high, while having a thickness of approximately 2 cm. However, the size of the body 1 may vary according to the use. The length may be, for example 1 or 1.5 m, height 15 cm to 35 cm and thickness 1.5 cm to 7 cm, for example 3 cm or 5 cm.

The battery pack of fig. 1 comprises two temperature regulation elements 9. Depending on the arrangement of the battery cells, the battery pack can comprise three (if the middle row of battery cells is in contact with both temperature regulation elements) or four (if there are two rows of battery cells between the temperature regulation elements) rows of battery cells, for example. In the embodiment of fig. 1, the battery cells are arranged in twelve battery modules, each temperature regulation element being in thermal contact with six battery modules. Each temperature regulation element comprises two heat-exchange surfaces 13.

In figure 1, a guiding arrangement 5 is displayed on the left side. The guiding arrangement 5 comprises an inlet and an outlet for the thermal transfer fluid (depicted as two tube connectors at the guiding arrangement 5). The guiding arrangement 5 directs the thermal transfer fluid into the first fluid channel, and out from the second fluid channel. The inlet and outlet are not discernible from each other in fig. 1, and therefore not marked.

The end of the body 1 of the temperature regulation element 9 to which the guiding arrangement 5 is attached, is termed the first end 11. The end opposite to the first end 11 is termed the second end 12. The first end 11 and the second end 12 of this embodiment extend through the casing 8.

At the second end 12, a connection element 4 is displayed. The connection element 4 connects the first fluid channel (s) and second fluid channel (s) to each other, so that the thermal transfer fluid may flow through the temperature regulation element 9. In this embodiment, the flow path of the thermal transfer fluid makes a U turn at the second end 12 of the body 1, making the flow direction of the thermal transfer fluid in the first fluid channel 2 and second fluid channel 3 opposite (not depicted in fig. 1). The first fluid channel (s) and second fluid channel (s) are connected outside of the body 1.

The embodiment of fig. 1 also comprises protrusions 14 on both narrow sides of the body 1 (i.e. upwards and downwards in fig. 1). In addition to improving thermal exchange, the protrusions 14 may have other functions, such as guiding the electrical wirings of the battery pack.

Figure 2 is a schematic presentation of a temperature regulation element 9 according to the current disclosure from one side. Structures being behind other structures are depicted by dashed outline (battery cells are omitted). In this embodiment, the body 1 is mostly behind the casing 8. However, in fig. 2, it can be clearly seen how the first end 11 and the second end 12 of the body 1 extend outside the casing 8. This may produce a liquid-tight structure surrounding the battery cells (not depicted in fig. 2).

Although the body 1 is displayed as having a constant height (in the viewing direction of fig. 2), it could have a change in height at the position which is designed to penetrate the casing 8.

The connection element 4 and the guiding arrangement 5 are shown in fig. 2. In this figure, the inlet 51 has been marked as being the upper of the two connectors at the first end 11 of the body 1, and the outlet 52 has been marked as being the lower one.

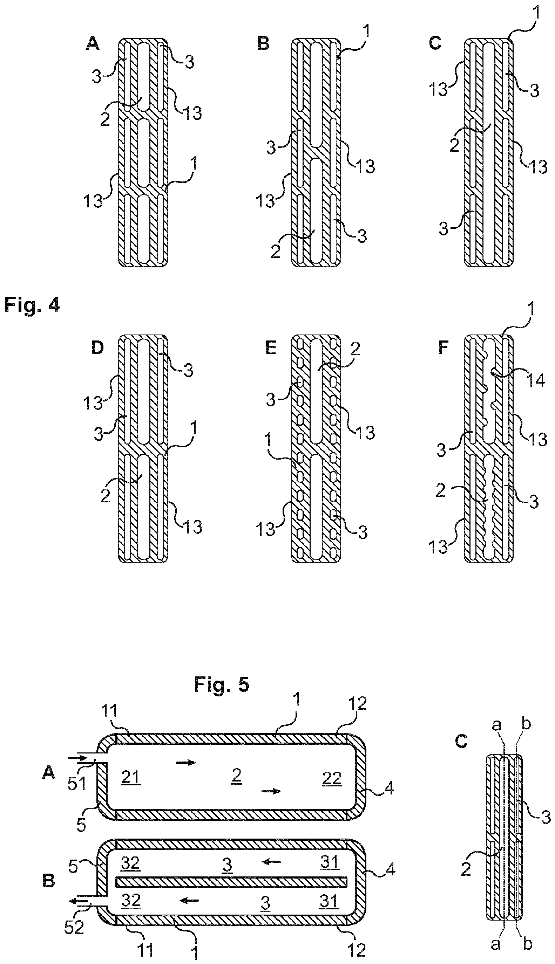

The dashed line x-x marks the direction of the cross section in figures 3 and 4.

Figure 3 depicts a cross section along the axis x-x of fig. 2 of two embodiments. Battery cells 6 whose temperature is being regulated are shown in the figure. In the embodiment of figure 3, one of the large sides of the battery cell 6 is positioned against the body 1 of the temperature regulation element. However, in some embodiments, the side opposite to the electrical terminals (i.e. the bottom) of a prism-shaped battery cell 6 is in thermal contact with the body 1. Further, the structure being positioned adjacent to the body 1 may be a battery cell, or a battery module.

In panel A, a temperature regulation element having two heat-exchange surfaces 13 is depicted. The body 1 comprises three first fluid channels 2 and six second fluid channels 3. The second fluid channels 3 are arranged in two groups of three channels, each group being proximal to one heat-exchange surface 13.

In panel B, a temperature regulation element having one heat-exchange surface 13 is depicted. The body 1 comprises three first fluid channels 2 and three second fluid channels 3. The second fluid channels 3 are arranged between the first fluid channel 2 and the heat-exchange surface 13. The side of the body 1 facing away from the battery cell 6 is in contact with thermal insulation material 7, which is intended to minimize thermal exchange with other structures than the battery cell 6. The skilled person can select the material, thickness and other features of such insulation material 7.

In panel A, the cross-sectional area of the first fluid channels 2 is larger than that of the second fluid channels 3. This reflects the larger number of second fluid channels 4 compared to the first fluid channels 2. In such a design, the flow speed of the thermal transfer fluid may be approximately constant throughout the body 1. However, embodiments can be envisaged in which the flow speed of the thermal transfer fluid in different parts of the body 1 can be varied by changing the cross-sectional surface area of the fluid channels 2,3.

Figure 4 depicts various exemplary embodiments of the fluid channels 2, 3 in a temperature regulation element 9 according to the current disclosure.

In panel A, an embodiment similar to that of fig. 3A is displayed. Three parallel first fluid channels 2 divide the thermal transfer fluid into two groups of three second fluid channels 3. Each group of second fluid channels 3 is positioned between a heat-exchange surface 13 and a first fluid channel 2. All the fluid channels 2,3 are flattened so that the majority of the surface area of all the fluid channels 2,3 is parallel to the heat-exchange surfaces 13. The first fluid channels 2 are of the same size, and larger (i.e. have a larger cross-sectional surface area) than the second fluid channels 3.

Panel B depicts a similar embodiment to panel A, but there are two first fluid channels 2. The arrangement of the heat-exchange surfaces 13 and second fluid channels 3 is the same as in panel A. Due to the differing number of inner and second fluid channels 2,3, the inner and second fluid channels 2,3 are staggered, i.e. the walls separating them are not aligned.

Panel C depicts yet another embodiment with two heat-exchange surfaces 13 and two groups of three second fluid channels 3. Here, a single first fluid channel 2 feeds the thermal transfer fluid into all the second fluid channels 3. It would be equally possible to have two second fluid channels 3 in each group. In addition, two groups of a single second fluid channel 3 would be possible.

Panel D is a similar embodiment to those of panels A to C, but here, there are two first fluid channels 2, and two second fluid channels 3 for each of the two heat-exchange surfaces 13.

The embodiment of panel E, on the other hand has again two first fluid channels 3, but a group of twelve second fluid channels 3 for each of the two heat-exchange surfaces 13. In the figure, the second fluid channels 3 are depicted as having an elongate cross section. However, a circular cross section might be structurally preferred, and also such shape could well be used.

Panel F exemplifies means that may be used to increase the surface area thought which the thermal exchange might take place. In this panel, the upper of the first fluid channels 2 contain protrusions 14 that extend as heat-exchange ribs 14 along the length of the first fluid channel 2. In the figure, five ribs 14 are displayed, but their number and size may be varied according to the application as is known to the skilled person.

The walls of the lower of the first fluid channels 2 contain corrugations, which also function to increase the surface area of the first fluid channel 2 positively affecting the thermal exchange capacity of the system.

Figure 5 displays schematic longitudinal sections of a temperature regulation element 9 according to the present disclosure. Panel C shows the cross section in a similar manner as in figure 4, and the positions of the longitudinal sections in panels A and B are marked with dashed lines a-a and b-b, respectively.

Panel A depicts the single first fluid channel 2. It extends through the whole body 1, starting at the inlet end 21 and ending at the connection end 22, which is connected by the connection element 4 with the second fluid channels 3. The guiding arrangement 5 is positioned at the inlet end 21 of the first fluid channel 2. The arrows indicate the flow direction of the thermal transfer fluid, which enters the temperature regulation element through the inlet 51.

Panel B depicts two of the four second fluid channels 3 of this embodiment on one side of the first fluid channel 2. Again, the direction of the thermal transfer fluid flow is marked with arrows. The thermal transfer fluid enters the second fluid channels 3 at the receiving end 31, where the connection element 4 turns the flow from the first fluid channel 2 into the second fluid channels 3. The second fluid channels 3 end at the outlet end 32, where the thermal transfer fluid enters the guiding arrangement 5 and exits the temperature regulation element through the outlet 52.

It is obvious to a person skilled in the art that with the advancement of technology, the basic idea of the invention may be implemented in various ways. The invention and its embodiments are thus not limited to the examples described above; instead, they may vary within the scope of the claims.

## Claims

1. A temperature regulation element for a battery cell, comprising a metal body (1) having a first end (11) and a second end (12), and comprising at least one heat-exchange surface (13) between the first end (11) and the second end (12) for making thermal contact with a battery cell (6); the body (1) further comprising at least one first fluid channel (2) and at least one second fluid channel (3), each extending inside the body (1) between the first end (11) and the second end (12) of the body (1) and together forming a continuous flow channel for thermal transfer fluid; **characterized in that** the at least one first fluid channel (2) is positioned further away from the heat-exchange surface than the at least one second fluid channel (3), and **in that** the first fluid channel (2) and the second fluid channel (3) are configured to allow thermal exchange between the thermal transfer fluid flowing in the at least one first fluid channel (2) and the thermal transfer fluid flowing in the at least one second fluid channel (3).

2. The temperature regulation element according to claim 1, wherein the first fluid channel (2) comprises an inlet end (21) for the thermal transfer fluid (F) to enter into the body (1), and the second fluid channel (3) comprises an outlet end (32) for the thermal transfer fluid to exit the body (1).

3. The temperature regulation element according to claim 1 or 2, wherein the flow direction of the thermal transfer fluid in the second fluid channel (3) is the opposite to the flow direction of the thermal transfer fluid in the first fluid channel (2) in respect to the first end (11) and the second end (12) of the body (1).

4. The temperature regulation element according to any of the preceding claims, wherein the inner and second fluid channels (2, 3) run parallel to each other.

5. The temperature regulation element according to any of the preceding claims, wherein the inner and second fluid channels (2,3) extend substantially over the whole length between the first end and the second end of the body (1).

6. The temperature regulation element according to any of the preceding claims, wherein the continuous flow channel for thermal transfer fluid (F) is formed by connecting the at least one first fluid channel (2) and the at least one second fluid channel (3) by a connection element (4) outside the body (1).

7. The temperature regulation element according to any of the preceding claims, wherein the body (1) comprises two or more second fluid channels (3) extending parallel to each other between the at least one first fluid channel (2) and the heat-exchange surface (13).

8. The temperature regulation element according to any of the preceding claims, wherein the body (1) comprises two or more first fluid channels (2) extending parallel to each other at the same distance from the heat-exchange surface (13).

9. The temperature regulation element according to any of the preceding claims, wherein the body (1) comprises two heat-exchange surfaces (13) on opposite sides of the body (1), and at least two second fluid channels (3), and wherein the second fluid channels (3) extend between the at least one first fluid channel (2) and each heat-exchange surface (13).

10. The temperature regulation element according to claim 1, wherein the temperature regulation element further comprises a guiding arrangement (5) at the first end of the body (1) for directing incoming thermal transfer fluid into the at least one first fluid channel (2) through an inlet (51), and for directing outgoing thermal transfer fluid from the at least one second fluid channel through an outlet (52).

11. The temperature regulation element according to any of the preceding claims, wherein the metal body (1) is made of extruded aluminium or aluminium alloy.

12. A battery module **characterized in that** it comprises a temperature regulation element according to any of the preceding claims.

13. A battery pack, **characterized in that** it comprises a temperature regulation element according to any of claims 1-11.

14. The battery pack according to claim 13, wherein the battery pack comprises a casing (8) configured to surround the battery cells (6), and the first end (11) and the second end (12) of the body (1) are inserted into the casing (8).

15. The battery pack according to claim 13 or 14, wherein the first end (11) and the second end (12) of the body (1) extend outside the casing (8).

16. The battery pack according to any of claims, wherein the body (1) is attached to the casing (8) by welding.

17. Use of a temperature regulation element according to any of claims 1 to 11 for regulating the temperature of battery cells in an electricity-powered vehicle.
